(19) Europäisches Patentamt / European Patent Office / Office européen des brevets

(11) **EP 3 164 365 B1**

(12) **EUROPEAN PATENT SPECIFICATION**

(45) Date of publication and mention
of the grant of the patent:
**28.04.2021 Bulletin 2021/17**

(21) Application number: **15814933.6**

(22) Date of filing: **23.06.2015**

(51) Int Cl.:
***C03C 21/00*** *(2006.01)*        ***C03C 3/091*** *(2006.01)*

(86) International application number:
**PCT/CN2015/082080**

(87) International publication number:
**WO 2016/000540 (07.01.2016 Gazette 2016/01)**

(54) **GLASS COMPOSITION FOR CHEMICALLY STRENGTHENED ALKALI-ALUMINOSILICATE GLASS AND METHOD FOR THE MANUFACTURE THEREOF**

GLASZUSAMMENSETZUNG FÜR CHEMISCH VERSTÄRKTES ALKALI-ALUMINOSILIKAT-GLAS UND VERFAHREN ZUR HERSTELLUNG DAVON

COMPOSITION DE VERRE POUR VERRE DE TYPE ALCALI-ALUMINOSILICATE CHIMIQUEMENT RENFORCÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2014 CN 201410311310**

(43) Date of publication of application:
**10.05.2017 Bulletin 2017/19**

(73) Proprietor: **Kornerstone Materials Technology Co., Ltd**
**Fuzhou, Fujian 350015 (CN)**

(72) Inventors:
• **DING, Jack Y.**
**Fuzhou**
**Fujian (CN)**
• **CHEN, Cherry**
**Fuzhou**
**Fujian (CN)**
• **LIANG, Peter**
**Fuzhou Fujian PRC 350015 (CN)**
• **CHANG, David**
**Fuzhou**
**Fujian (CN)**

(74) Representative: **Straus, Alexander**
**2K Patent- und Rechtsanwälte - München**
**Keltenring 9**
**82041 Oberhaching (DE)**

(56) References cited:
**CN-A- 103 443 041**        **JP-A- 2013 193 887**
**US-A- 4 119 760**          **US-A1- 2012 083 401**
**US-A1- 2012 171 497**

**Description**

**Field of the Invention**

The present invention relates to a glass composition for chemically strengthened alkali-aluminosilicate glass, a method for manufacturing the chemically strengthened alkali-aluminosilicate glass and applications and uses for the chemically strengthened alkali-aluminosilicate glass. Such uses for the chemically strengthened alkali-aluminosilicate glass include touch displays using high strength cover glass, solar cell cover glass and laminate safety glass; and, more specifically, include touch displays using curved cover glass and 3D cover glass as well as vehicle glass.

**Background**

Chemically strengthened glass is typically significantly stronger than annealed glass due to the glass composition and the chemical strengthening process used to manufacture the glass. Such chemical strengthening processes can be used to strengthen glass of all sizes and shapes without creating optical distortion which enables the production of thin, small, and complex-shaped glass samples that are not capable of being tempered thermally. These properties have made chemically strengthened glass, and more specifically, chemically strengthened alkali-aluminosilicate glass, a popular and widely used choice for consumer mobile electronic devices such as smart phones, tablets and notepads. US 2012/0083401 and US 2012/0171497 describe ion-exchanged alkali-aluminosilicate glass.

Touch glass and its applications have achieved wide market coverage, and there is also an increasing demand for curved formed glass. The formation of curved formed glass is largely controlled by the glass transition temperature ($T_g$) and the softening temperature ($T_s$) of the glass in question and generally when $T_g$ is lower than 545°C and $T_s$ is lower than 765°C, the forming temperature of the curved glass is relatively decreased which lowers its cost and production rate.

Molding is the most commonly used curved glass forming technology. According to such molding techniques, a glass blank is first loaded into the molding tool. After reaching the glass transition temperature ($T_g$), the glass is formed and shaped to the contour of the mold cavity. After the molding has been completed, the glass is cooled and demolded, and is then removed from the molding tool. There is a greater choice of mold materials available when the glass transition temperature ($T_g$) and the glass softening temperature ($T_s$) are in the ranges noted above. When the glass transition temperature ($T_g$) is relatively low, the production rate and maintenance efficiency are increased, as the thermal cycling temperature range and molding tack time are relatively low too. Moreover, when the glass transition temperature ($T_g$) is relatively low, the thermal differential effect between the equipment and the molding cavity is small. Processing will be easier when the forming temperature is closer to the demolding temperature, even cavities cooling to complete demolding in a short time can be achieved with the help of additional cooling equipment. Table 1 below shows a comparison of $T_s$ and $T_g$ for several commercially available examples of strengthened cover glass. The glass transition temperature ($T_g$) and the glass softening temperature ($T_s$) for such commercially available examples of strengthened cover glass are not in the ranges noted above.

**TABLE 1**

| Sample | AGC Dragontrail™ | NEG T2X-1 | Schott Xensation® | Corning Gorilla® Glass 1 | Corning Gorilla® Glass 2 | Corning Gorilla® Glass 3 |
|---|---|---|---|---|---|---|
| $T_s$ | 831°C | 868°C | 881°C | 847°C | 891°C | 900°C |
| $T_g$ | 604°C | 605°C | 615°C | 606°C | 642°C | n/a |

The chemical strengthening processes typically include an ion exchange process. In such ion exchange processes, the glass is placed in a molten salt containing ions having a larger ionic radius than the ions present in the glass, such that the smaller ions present in the glass are replaced by larger ions from the heated solution. Typically, potassium ions in the molten salt replace smaller sodium ions present in the glass. The replacement of the smaller sodium ions present in the glass by larger potassium ions from the heated solution results in the formation of a compressive stress layer on both surfaces of the glass and a central tension zone sandwiched between the compressive stress layers. The tensile stress ("CT") of the central tension zone (typically expressed in megapascals (MPa)) is related to the compressive stress ("CS") of the compressive stress layer (also typically expressed in megapascals), and the depth of the compressive stress layer ("DOL") by the following equation:

$$CT = CS \times DOL/(t\text{-}2DOL)$$

where t is the thickness of the glass.

The current specifications for glass with a thickness of 0.7 mm is a depth of layer of about 40 $\mu$m, a compressive stress of not less than 650 MPa, and a tensile stress of the central tension zone of less than 60 MPa. Indeed, the tensile stress of the central tension zone should be kept within about 60-70 MPa to ensure a good cutting yield.

For use as cover glass for a touch display, it is desirable to increase the resistance of the glass to scratches and impaction damage. This can be accomplished by increasing the compressive stress and the depth of the compressive stress layer. However, to keep the tensile stress of the central tension zone within an acceptable range, an increase in both the compressive stress and the depth of the compressive stress layer undesirably results in an increase in the thickness of the glass.

Also, it is desirable for cover glass to be as thin as possible. However, since the tensile stress of the central tension zone increases as the thickness of the glass decreases, it is difficult to maintain an acceptable tensile stress of the central tension zone while also maintaining a high compressive stress and a high depth of the compressive stress layer.

The duration of the chemical strengthening process is a key factor in the manufacturing cost of chemically strengthened glass. Generally, the duration of the ion exchange process must be extended to increase the depth of the compressive stress layer. Shorter ion exchange times, however, are usually desired. The shorter the ion exchange time, the more competitive the production line and process. The ion exchange time is controlled by reaction temperature and ion diffusion rate. Decreasing the temperature can avoid warping, but increase the ion exchange time. Keeping the glass sheet at higher temperatures may increase the ion diffusion rate, but leads to warping and structural relaxation, which in turn can lead to a decrease in compressive stress. Thus, conducting the ion exchange process at a higher temperature may shorten the ion exchange time but has other undesirable results.

The chemical strengthening process can be performed in two ways: (1) the piece process and (2) the one glass solution (OGS) process. The piece process involves cutting a piece of glass into the final size to be used, and then drilling, grinding, beveling, and polishing the individual pieces. The processed pieces are then placed in molten potassium salt for chemical strengthening. The smaller sized pieces provide greater control over temperature and molten salt concentration. Moreover, the edges on both sides of the pieces can be chemically strengthened. Thus, high strength and a low rate of warping can be achieved, leading to a high yield.

In contrast, the OGS process involves strengthening the full sheet of glass first, adding touch sensors and printed circuits on the glass surface, then scribing the glass and finally cutting the glass. Compared to the piece process, a larger furnace is typically required in the OGS process. The way the glass is handled and placed may lead to warping of the glass or breakage. In the OGS process, the CS on the chemically strengthened glass surface facilitates resistance to outer damage, but may increase the cutting difficulty. Also, if the CT is too high, the scribing wheel may cause the glass to crack, chip or break when it enters the CT zone during cutting. The scribing edges and sides cannot be fully chemically strengthened in the OGS process, so the strength of glass made by the OGS process is generally lower than glass made by the piece process. Despite the difficulties in the OGS process, the cost-effectiveness and production efficiency of the OGS process are superior to the piece process.

As chemically strengthened glass becomes thinner and stronger, it becomes a challenge to keep a high DOL and a high CS without increasing the CT. A chemically strengthened glass that is thin, with a high CS and controlled CT, and that is produced with shortened ion exchange times is desired.

**Detailed Description**

The present invention provides a chemically strengthened alkali-aluminosilicate glass according to claim 1, which has a surface compressive stress layer with high compressive stress (CS) and a low depth of layer (DOL). The high compressive stress (CS) together with the low depth of layer (DOL) is obtained through a chemical strengthening process in which sodium ions on the glass surface are replaced by larger potassium ions. A low DOL is beneficial for glass finishing since the yield of the scribing process is increased. Also, a glass surface with high compressive stress yields a stronger glass that can withstand increased external impaction forces and resist scratching.

In several exemplary embodiments, the ion-exchangeable glass composition for producing chemically strengthened alkali-aluminosilicate glass includes:

> from about 59.0 to about 65.0 weight percent (wt%) of silicon dioxide ($SiO_2$),
> from about 11.9 to about 13.0 wt% of aluminum oxide ($Al_2O_3$),
> from about 16.0 to about 18.5 wt% of sodium oxide ($Na_2O$),
> from about 0 to about 1.0 wt% of boron trioxide ($B_2O_3$),
> from about 2.8 to about 3.3 wt% of potassium oxide ($K_2O$), and

from about 2.0 to about 6.0 wt% of magnesium oxide (MgO),

wherein the weight ratio of the combined total of $B_2O_3$, $Na_2O$ and $K_2O$ to $Al_2O_3$ is greater than 1.5; and
wherein the weight ratio of the combined total of $Na_2O$ and $K_2O$ to $Al_2O_3$ and MgO is greater than 1.0.

According to several exemplary embodiments, the ion-exchangeable glass composition for producing chemically strengthened alkali-aluminosilicate glass consists essentially of:

from about 59.0 to about 65.0 weight percent (wt%) of silicon dioxide ($SiO_2$),
from about 11.9 to about 13.0 wt% of aluminum oxide ($Al_2O_3$),
from about 16.0 to about 18.5 wt% of sodium oxide ($Na_2O$),
from about 0 to about 1.0 wt% of boron trioxide ($B_2O_3$),
from about 2.8 to about 3.3 wt% of potassium oxide ($K_2O$), and
from about 2.0 to about 6.0 wt% of magnesium oxide (MgO),

wherein the weight ratio of the combined total of $B_2O_3$, $Na_2O$ and $K_2O$ to $Al_2O_3$ is greater than 1.5; and
wherein the weight ratio of the combined total of $Na_2O$ and $K_2O$ to $Al_2O_3$ and MgO is greater than 1.0.

According to several exemplary embodiments, the ion-exchangeable glass composition for producing chemically strengthened alkali-aluminosilicate glass includes from about 59.0 to about 65.0 wt% of silicon dioxide ($SiO_2$). Silicon dioxide is the largest single component of the alkali-aluminosilicate glass composition and forms the matrix of the glass together with boron trioxide ($B_2O_3$). Silicon dioxide also serves as a structural coordinator of the glass and contributes formability, rigidity and chemical durability to the glass. According to several exemplary embodiments, the glass viscosity is enhanced when the $SiO_2$ is present in the ion-exchangeable glass composition for producing chemically strengthened alkali-aluminosilicate glass in a range of from about 59.0 wt% up to about 65.0 wt%. At concentrations above 65.0 wt%, silicon dioxide raises the melting temperature of the glass composition and may cause the liquidus temperature to increase substantially in glass compositions having relatively high concentrations of $K_2O$ or MgO due to glass stability.

According to several exemplary embodiments, the ion-exchangeable glass composition for producing chemically strengthened alkali-aluminosilicate glass includes from about 11.9 to about 13.0 wt% of aluminum oxide ($Al_2O_3$). At concentrations of about 11.9 to about 13.0 wt%, the aluminum oxide enhances the strength of the chemically strengthened alkali-aluminosilicate glass and facilitates the ion-exchange between sodium ions in the surface of the glass and potassium ions in the ion exchange solution. According to several exemplary embodiments, the glass viscosity is enhanced when the $Al_2O_3$ is present in the ion-exchangeable glass composition for producing chemically strengthened alkali-aluminosilicate glass in a range of from about 11.9 wt% up to about 13.0 wt%. At concentrations of aluminum oxide above 13.0 wt%, the viscosity of the glass may become prohibitively high so that it tends to devitrify the glass and the liquidus temperature may become too high to perform a continuous sheet forming process. Therefore, the ratio of the total content of flux oxides ($B_2O_3$, $Na_2O$ and $K_2O$) in the ion-exchangeable glass composition for producing chemically strengthened alkali-aluminosilicate glass to the total content of $Al_2O_3$ is greater than 1.5.

According to several exemplary embodiments, the ion-exchangeable glass composition for producing chemically strengthened alkali-aluminosilicate glass includes from about 16.0 to about 18.5 wt% of sodium oxide ($Na_2O$). Alkali metal oxides serve as aids in achieving low liquidus temperatures and low melting temperatures. In the case of sodium, $Na_2O$ is also used to enable successful ion exchange. In order to permit sufficient ion exchange to produce substantially enhanced glass strength, sodium oxide is included in the composition in the concentrations set forth above. Also, to increase the possibility of ion exchange between sodium ions and potassium ions, according to several exemplary embodiments, the ion-exchangeable glass composition for producing chemically strengthened alkali-aluminosilicate glass includes from about 2.8 to about 3.3 wt% of potassium oxide ($K_2O$).

According to several exemplary embodiments, the ion-exchangeable glass composition for producing chemically strengthened alkali-aluminosilicate glass includes from about 0 to about 1.0 wt% of boron trioxide ($B_2O_3$). Together with silicon, trivalent boron is a network-forming element and also plays a role in increasing the glass formability. In addition, as noted above, boron trioxide serves as a flux. The B-O bond usually occurs in oxide glasses with coordination numbers of 3 and 4, which is of high field strength and indicate that the B-O bond is also very strong. However, the bonds between the groups of $[BO_n]$ structure units are very weak at high temperatures which are different from the behavior of the vitreous groups of $[SiO_n]$. The viscosity of boron oxide at high temperatures is much lower than that of silica, so that according to several exemplary embodiments of the ion-exchangeable glass composition for producing chemically strengthened alkali-aluminosilicate glass boron oxide acts as a very efficient flux.

According to several exemplary embodiments, the ion-exchangeable glass composition for producing chemically strengthened alkali-aluminosilicate glass includes from about 2.0 to about 8.0 wt% of magnesium oxide (MgO).

Magnesium oxide is also believed to increase the strength of the glass and to decrease the specific weight of the glass as compared to other alkaline oxides such as calcium oxide (CaO), strontium oxide (SrO) and barium oxide (BaO).

According to several exemplary embodiments, the ion-exchangeable glass composition for producing chemically strengthened alkali-aluminosilicate glass includes a ratio of the combined total content of boron trioxide ($B_2O_3$), sodium oxide ($Na_2O$) and potassium oxide ($K_2O$) to the content of aluminum oxide ($Al_2O_3$) of greater than 1.5.

According to several exemplary embodiments, the ion-exchangeable glass composition for producing chemically strengthened alkali-aluminosilicate glass includes a ratio of the combined total content of sodium oxide ($Na_2O$) and potassium oxide ($K_2O$) to the combined total content of aluminum oxide ($Al_2O_3$) and magnesium oxide (MgO) of greater than 1.0.

According to several exemplary embodiments, the present invention provides a method for manufacturing a chemically strengthened alkali-aluminosilicate glass. According to several exemplary embodiments, the method includes:

mixing and melting the components to form a homogenous glass melt;
shaping the glass using the down-draw method, the floating method and combinations thereof;
annealing the glass; and
chemically strengthening the glass by ion exchange.

According to several exemplary embodiments, the manufacture of the chemically strengthened alkali-aluminosilicate glass may be carried out using conventional down-draw methods which are well known to those of ordinary skill in the art and which customarily include a directly or indirectly heated precious metal system consisting of a homogenization device, a device to lower the bubble content by means of fining (refiner), a device for cooling and thermal homogenization, a distribution device and other devices. The floating method includes floating molten glass on a bed of molten metal, typically tin, resulting in glass that is very flat and has a uniform thickness.

According to several exemplary embodiments of the method for manufacturing a chemically strengthened alkali-aluminosilicate glass described above, the ion-exchangeable glass composition is melted for up to about 12 hours at about 1650°C. According to several exemplary embodiments of the method for manufacturing a chemically strengthened alkali-aluminosilicate glass described above, the ion-exchangeable glass composition is melted for up to about 6 hours at about 1650°C. According to several exemplary embodiments of the method for manufacturing a chemically strengthened alkali-aluminosilicate glass described above, the ion-exchangeable glass composition is melted for up to about 4 hours at about 1650°C.

According to several exemplary embodiments of the method for manufacturing a chemically strengthened alkali-aluminosilicate glass described above, the ion-exchangeable glass composition is annealed at a rate of about 1.0°C/hour until the glass reaches 500°C, after which the glass composition is allowed to cool to room temperature (or about 21°C).

According to several exemplary embodiments, the ion-exchangeable glass composition for producing chemically strengthened alkali-aluminosilicate glass described above is chemically strengthened according to conventional ion exchange conditions. According to several exemplary embodiments of the method for manufacturing a chemically strengthened alkali-aluminosilicate glass described above, the ion exchange process occurs in a molten salt bath. In several exemplary embodiments, the molten salt is potassium nitrate ($KNO_3$).

According to several exemplary embodiments of the method for manufacturing a chemically strengthened alkali-aluminosilicate glass described above, the ion exchange treatment takes place at a temperature range of from about 380°C to about 450°C.

According to several exemplary embodiments of the method for manufacturing a chemically strengthened alkali-aluminosilicate glass described above, the ion exchange treatment is conducted for up to about 8 hours. According to several exemplary embodiments of the method for manufacturing a chemically strengthened alkali-aluminosilicate glass described above, the ion exchange treatment is conducted for up to about 4 hours. According to several exemplary embodiments of the method for manufacturing a chemically strengthened alkali-aluminosilicate glass described above, the ion exchange treatment is conducted for up to about 2 hours. According to several exemplary embodiments of the method for manufacturing a chemically strengthened alkali-aluminosilicate glass described above, the ion exchange treatment is conducted for about 2 hours to about 8 hours. According to several exemplary embodiments of the method for manufacturing a chemically strengthened alkali-aluminosilicate glass described above, the ion exchange treatment is conducted for about 4 hours at a temperature of about 420°C.

According to several exemplary embodiments of the chemically strengthened alkali-aluminosilicate glass described above, the glass has a surface compressive stress layer having a compressive stress of at least about 650 MPa. According to several exemplary embodiments of the chemically strengthened alkali-aluminosilicate glass described above, the glass has a surface compressive stress layer having a compressive stress of at least about 700 MPa. According to several exemplary embodiments of the chemically strengthened alkali-aluminosilicate glass described above, the glass has a surface compressive stress layer having a compressive stress of from about 720 MPa to about 755 MPa. According to several exemplary embodiments of the chemically strengthened alkali-aluminosilicate glass described above, the glass has a surface compressive stress layer having a compressive stress of at least about 1100 MPa. According to several exemplary embodiments of the chemically strengthened alkali-aluminosilicate glass described above, the glass has a surface compressive stress layer having a compressive stress of up to about 1350 MPa. According to several exemplary embodiments of the chemically strengthened alkali-aluminosilicate glass described above, the glass has a surface compressive stress layer having a compressive stress of from about 650 MPa to about 1350 MPa.

According to several exemplary embodiments of the chemically strengthened alkali-aluminosilicate glass described above, the glass has a compressive stress layer having a depth of at least about 30.0 $\mu$m. According to several exemplary embodiments of the chemically strengthened alkali-aluminosilicate glass described above, the glass has a compressive stress layer having a depth of at least about 35.0 $\mu$m. According to several exemplary embodiments of the chemically strengthened alkali-aluminosilicate glass described above, the glass has a compressive stress layer having a depth of from about 30.0 $\mu$m to about 45.0 $\mu$m. According to several exemplary embodiments of the chemically strengthened alkali-aluminosilicate glass described above, the glass has a compressive stress layer having a depth of from about 35.0 $\mu$m to about 45.0 $\mu$m.

According to several exemplary embodiments of the chemically strengthened alkali-aluminosilicate glass described above, the glass has a tensile stress (CT) of less than about 70 MPa. According to several exemplary embodiments of the chemically strengthened alkali-aluminosilicate glass described above, the glass has a tensile stress (CT) of less than about 55 MPa. According to several exemplary embodiments of the chemically strengthened alkali-aluminosilicate glass described above, the glass has a tensile stress (CT) of from about 40 MPa to about 55 MPa.

According to several exemplary embodiments of the chemically strengthened alkali-aluminosilicate glass described above, the glass has a thickness of from about 0.4 to about 2.0 mm.

According to several exemplary embodiments of the chemically strengthened alkali-aluminosilicate glass described above, the glass has a density of up to about 2.6 g/cm$^3$ and a linear coefficient of expansion $\alpha_{25\text{-}300}$ $10^{-7}$/°C in a range of from about 97.0 to about 105.0.

According to several exemplary embodiments of the chemically strengthened alkali-aluminosilicate glass described above, the glass may be used as a protective glass in applications such as solar panels, refrigerator doors, and other household products. According to several exemplary embodiments of the chemically strengthened alkali-aluminosilicate glass described above, the glass may be used as a protective glass for televisions, as safety glass for automated teller machines, and additional electronic products. According to several exemplary embodiments of the chemically strengthened alkali-aluminosilicate glass described above, the glass may be used as cover glass for consumer mobile electronic devices such as smart phones, tablets and note pads. According to several exemplary embodiments of the chemically strengthened alkali-aluminosilicate glass described above, the glass may be used as a touch display using high strength cover glass, solar cell cover glass and laminated safety glass and more particularly may be used as a touch display using curved cover glass and 3D cover glass as well as vehicle glass.

The following examples are illustrative of the compositions and methods discussed above.

## Examples:

An ion-exchangeable glass composition that included the components shown below in Table 2 was prepared as follows:

**TABLE 2**

| Oxide | Wt% |
|---|---|
| SiO$_2$ | 63.35 |
| Al$_2$O$_3$ | 12.0 |
| Na$_2$O | 16.5 |
| B$_2$O$_3$ | 0.3 |
| K$_2$O | 3.0 |
| MgO | 4.85 |

Batch materials, as shown in Table 3 were weighed and mixed before being added to a 2 liter plastic container. The batch materials used were of chemical reagent grade quality.

TABLE 3

| Batch raw materials | Batch weight (gm) |
|---|---|
| Sand | 316.75 |
| Alumina hydroxide | 91.8 |
| Soda ash | 142.70 |
| Borax | 2.17 |
| Potassium carbonate | 22.01 |
| Magnesia | 22.25 |

The particle size of the sand was between 0.045 and 0.25 mm. A tumbler was used for mixing the raw materials to make a homogenous batch as well as to break up soft agglomerates. The mixed batch was transferred from the plastic container to an 800 ml. platinum-rhodium alloy crucible for glass melting. The platinum-rhodium crucible was placed in an alumina backer and loaded in a high temperature furnace equipped with MoSi heating elements operating at a temperature of 900°C. The temperature of the furnace was gradually increased to 1650°C and the platinum-rhodium crucible with its backer was held at this temperature for 4 hours. The glass sample was then formed by pouring the molten batch materials from the platinum-rhodium crucible onto a stainless steel plate to form a glass patty. While the glass patty was still hot, it was transferred to an annealer and held at a temperature of 550°C for 2 hours and was then cooled at a rate of 1.0°C/min to a temperature of 500°C. After that, the sample was cooled naturally to room temperature (21°C).

The glass sample was then chemically strengthened by placing it in a molten salt bath tank, in which the constituent sodium ions in the glass were exchanged with externally supplied potassium ions at a temperature of 420°C which was less than the strain point of the glass for 4 hours. By this method, the glass sample was strengthened by ion exchange to produce a compressive stress layer at the treated surface.

The measurement of the compressive stress at the surface of the glass and the depth of the compressive stress layer (based on double refraction) were determined by using a polarization microscope (Berek compensator) on sections of the glass. The compressive stress of the surface of the glass was calculated from the measured dual refraction assuming a stress-optical constant of 0.26 (nm*cm/N) (Scholze, H., Nature, Structure and Properties, Springer-Verlag, 1988, p.260).

The results for the composition shown in Table 2 above are shown below in Table 4 in the column designated as "Ex. 1". Additional compositions shown in Table 4 and designated as "Ex. 2" to "Ex. 10" were prepared in a similar manner as described above for the composition designated as Ex. 1.

**TABLE 4**

| Oxide (wt%) | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| $SiO_2$ | 63.35 | 64.0 | 63.5 | 64.0 | 63.9 | 63.4 | 63.4 | 64.2 | 64.9 | 63.35 |
| $Al_2O_3$ | 12.0 | 13.0 | 12.5 | 11.9 | 12.8 | 12.2 | 13.0 | 11.9 | 11.9 | 12.0 |
| $Na_2O$ | 16.5 | 16.4 | 17.0 | 16.0 | 16.4 | 18.0 | 16.5 | 16.0 | 16.0 | 18.0 |
| $B_2O_3$ | 0.3 | 0.3 | 0.3 | 0.8 | 0.5 | 0.2 | 0.4 | 0.8 | 0.9 | 0.2 |
| $K_2O$ | 3.0 | 3.2 | 2.8 | 3.3 | 3.0 | 2.9 | 3.0 | 2.8 | 2.8 | 3.1 |
| MgO | 4.85 | 3.1 | 3.9 | 4.0 | 3.4 | 3.3 | 3.7 | 4.3 | 3.5 | 3.35 |
| $(B_2O_3+Na_2O+K_2O)/AL_2O_3$ | 1.65 | 1.53 | 1.61 | 1.69 | 1.55 | 1.73 | 1.53 | 1.65 | 1.66 | 1.78 |
| $(Na_2O+K_2O)/(Al_2O_3+MgO)$ | 1.16 | 1.22 | 1.21 | 1.21 | 1.20 | 1.35 | 1.17 | 1.16 | 1.22 | 1.37 |
| $d$ (g/cm$^3$) | 2.46 | 2.44 | 2.45 | 2.44 | 2.44 | 2.44 | 2.45 | 2.44 | 2.43 | 2.44 |
| $n_D$ (20°C) | 1.503 | 1.499 | 1.501 | 1.501 | 1.501 | 1.500 | 1.501 | 1.502 | 1.500 | 1.501 |
| $\alpha$ (25-300°C, $\times 10^{-7}$/°C) | 99.5 | 98.7 | 100.1 | 98.8 | 98.5 | 103.5 | 98.6 | 97.5 | 97.5 | 104.3 |
| $T_m$ (10$^{2.5}$P/°C) | 1420 | 1458 | 1434 | 1438 | 1453 | 1419 | 1448 | 1439 | 1452 | 1414 |
| $T_w$ (10$^{4.0}$P/°C) | 1108 | 1125 | 1097 | 1111 | 1116 | 1097 | 1121 | 1119 | 1124 | 1092 |

(continued)

| Oxide (wt%) | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| $T_{liquidus}$(°C) | 900 | 860 | 880 | 900 | 880 | 860 | 890 | 910 | 890 | 880 |
| $T_s$($10^{7.6}$P/°C) | 752 | 761 | 753 | 757 | 761 | 742 | 759 | 759 | 761 | 738 |
| $T_a$($10^{13.0}$P/°C) | 542 | 550 | 544 | 545 | 549 | 537 | 549 | 547 | 549 | 535 |
| $T_{st}$($10^{14.5}$P/°C) | 501 | 510 | 503 | 505 | 509 | 498 | 508 | 506 | 508 | 495 |
| $T_g$($10^{13.4}$P/°C) | 536 | 542 | 535 | 538 | 541 | 528 | 540 | 538 | 541 | 526 |
| VH (kgf/mm$^2$) | 542 | 563 | 549 | 556 | 563 | 535 | 554 | 565 | 580 | 530 |
| VH w/CS (kgf/mm$^2$) | 625 | 640 | 627 | 635 | 643 | 612 | 634 | 647 | 652 | 600 |
| CS (MPa)(420°C, 4hrs) | 731 | 743 | 733 | 723 | 734 | 752 | 746 | 726 | 730 | 721 |
| DOL (μm)(420°C, 4hrs) | 42.0 | 43.0 | 40.0 | 40.0 | 43.0 | 41.0 | 44.0 | 38.0 | 37.0 | 41.0 |
| CT (MPa)(420°C, 4hrs) | 50.0 | 52.0 | 47.0 | 47.0 | 51.0 | 50.0 | 54.0 | 44.0 | 43.0 | 48.0 |

The definitions of the symbols set forth in Table 4 are as follows:

- $d$: density (g/cm$^3$), which is measured with the Archimedes method;

- $n_D$: refractive index, which is measured by refractometry;

- $\alpha$: coefficient of thermal expansion (CTE) which is the amount of linear dimensional change from 25 to 300°C, as measured by dilatometry;

- $T_m$($10^{2.5}$P/°C): the temperature at the viscosity of $10^{2.5}$ poise, as measured by high temperature cylindrical viscometry;
- $T_w$($10^{4.0}$P/°C): glass working temperature at the viscosity of $10^{4.0}$ poise by high temperature cylindrical viscometry;
- $T_{liquidus}$(°C): liquidus temperature where the first crystal is observed in a boat within a gradient temperature furnace, generally test is 72 hours for crystallization;
- $T_s$($10^{7.6}$P/°C): glass softening temperature at the viscosity of $10^{7.6}$ poise as measured by the fiber elongation method;
- $T_a$($10^{13.0}$P/°C): glass annealing temperature at the viscosity of $10^{13}$ poise as measured by the fiber elongation method;
- $T_{st}$($10^{14.5}$P/°C): glass strain temperature at the viscosity of $10^{14.5}$ poise and measured by the fiber elongation method;
- Tg($10^{13.4}$P/°C): glass transition temperature at the viscosity of $10^{13.4}$ poise and measured by a push-rod dilatometer;
- VH: Vicker's Hardness;
- VH w/CS: Vicker's Hardness after chemical strengthening;
- CS (MPa)(420°C, 4hrs): compressive stress (in-plane stress which tends to compact the atoms in the surface);
- DOL (μm)(420°C, 4hrs): depth of layer which represents the depth of the compressive stress layer below the surface to the nearest zero stress plane;
- CT (MPa)(420°C, 4hrs): central tensile stress which is calculated by the formula: CT = CS × DOL/(t - 2DOL) where t is the thickness of the glass.

## Claims

1. A chemically strengthened alkali-alumino-silicate glass made from a glass composition **characterized by** comprising:

from 59.0 to 65.0 wt% of $SiO_2$,
from 11.9 to 13.0 wt% of $Al_2O_3$,
from 16.0 to 18.5 wt% of $Na_2O$,
from 0 to 1.0 wt% of $B_2O_3$,
from 2.8 to 3.3 wt% of $K_2O$, and
from 2.0 to 6.0 wt% of MgO,
wherein 1.5 is < ($B_2O_3$ + $Na_2O$ + $K_2O$)/$Al_2O_3$;

wherein 1.0 is < $(Na_2O + K_2O)/(Al_2O_3 + MgO)$;
wherein the glass composition is ion-exchanged and has a surface compressive stress layer and a central tension zone, and the glass has a softening temperature of less than 765°C.

2. The chemically strengthened alkali-alumino-silicate glass according to claim 1, **characterized in that** the surface compressive stress layer has a compressive stress of at least 650 MPa, at least 700 MPa, or from 720 MPa to 755 MPa.

3. The chemically strengthened alkali-alumino-silicate glass according to claim 1, **characterized in that** the depth of the surface compressive stress layer is at least 30.0 $\mu$m, at least 35.0 $\mu$m, from 30.0 $\mu$m to 45.0 $\mu$m, or from 35.0 $\mu$m to 45.0 $\mu$m.

4. The chemically strengthened alkali-alumino-silicate glass according to claim 1, **characterized in that** the central tension zone has a central tension of up to 70 MPa, up to 55 MPa, or from 40 MPa to 55 MPa.

5. The chemically strengthened alkali-alumino silicate glass according to claim 1, **characterized in that** the glass has a density of up to 2.6 g/cm$^3$.

6. The chemically strengthened alkali-alumino silicate glass according to claim 1, **characterized in that** the glass has a linear coefficient of expansion ($\alpha_{25\text{-}300}$ $10^{-7}$/°C) of from 97.0 to 105.0.

7. The chemically strengthened alkali-aluminosilicate glass according to claim 1, **characterized in that** the glass has a transition temperature of less than 545°C.

8. A method for producing a chemically strengthened alkali-aluminosilicate glass, **characterized by** comprising:

   mixing and melting glass raw material components to form a homogenous glass melt comprising:

   from 59.0 to 65.0 wt% of $SiO_2$,
   from 11.9 to 13.0 wt% of $AL_2O_3$,
   from 16.0 to 18.5 wt% of $Na_2O$,
   from 0 to 1.0 wt% of $B_2O_3$,
   from 2.8 to 3.3 wt% of $K_2O$, and
   from 2.0 to 6.0 wt% of MgO,
   wherein 1.5 is < $(B_2O_3 + Na_2O + K_2O)/AL_2O_3$; and
   wherein 1.0 is < $(Na_2O + K_2O)/(A1_2O_3 + MgO)$;

   shaping the glass using a method selected from the down-draw method, the floating method and combinations thereof;
   annealing the glass; and
   chemically strengthening the glass by ion exchange;
   wherein the chemically strengthened alkali-alumino-silicate glass has a softening temperature of less than 765°C.

9. The method of claim 8, **characterized in that** the glass raw material components are melted for up to 12 hours or up to 4 hours at a temperature of 1650°C.

10. The method of claim 8, **characterized in that** the glass is annealed at a rate of 1.0°C/hour.

11. The method of claim 8, **characterized in that** the glass is chemically strengthened by ion exchange in a molten salt bath.

12. The method of claim 11, **characterized in that** the molten salt is $KNO_3$.

13. The method of claim 8, **characterized in that** the glass is chemically strengthened by ion exchange at a temperature of from 380°C to 450°C or at a temperature of 420°C.

14. The method of claim 8, **characterized in that** the glass is chemically strengthened by ion exchange for up to 8 hours, up to 4 hours, or up to 2 hours.

**Patentansprüche**

1. Chemisch verstärktes Alkali-Alumino-Silikatglas aus einer Glaszusammensetzung, **dadurch gekennzeichnet, dass** es enthält:

   $SiO_2$ in einem Anteil von 59,0 bis 65,0 Gew.-%,
   $Al_2O_3$ in einem Anteil von 11,9 bis 13,0 Gew.-%,
   $Na_2O$ in einem Anteil von 16,0 bis 18,5 Gew.-%,
   $B_2O3$ in einem Anteil von 0 bis 1,0 Gew.-%,
   $K_2O$ in einem Anteil von 2,8 bis 3,3 Gew.-% und
   $MgO$ in einem Anteil von 2,0 bis 6,0 Gew.-%,
   wobei $1.5 < (B_2O_3 + Na_2O + K_2O)/Al_2O_3$,
   wobei $1.0 < (Na_2O + K_2O)/(Al_2O_3 + MgO)$,
   wobei die Glaszusammensetzung ionenausgetauscht ist und eine
   Oberflächendruckspannungsschicht und einen zentralen Zugspannungsbereich aufweist, wobei das Glas eine
   Erweichungstemperatur von weniger als 765°C aufweist.

2. Chemisch verstärktes Alkali-Alumino-Silikatglas aus einer Glaszusammensetzung nach Anspruch 1, **dadurch gekennzeichnet, dass** die Oberflächendruckspannungsschicht eine Druckspannung von mindestens 650 MPa, von mindestens 700 MPa oder von 720 MPa bis 755 MPa aufweist.

3. Chemisch verstärktes Alkali-Alumino-Silikatglas aus einer Glaszusammensetzung nach Anspruch 1, **dadurch gekennzeichnet, dass** die Tiefe der Oberflächendruckspannungsschicht bei mindestens 30,0 $\mu$m, bei mindestens 35,0 $\mu$m, von 30,0 $\mu$m bis 45,0 $\mu$m oder von 35,0 $\mu$m bis 45,0 $\mu$m liegt.

4. Chemisch verstärktes Alkali-Alumino-Silikatglas aus einer Glaszusammensetzung nach Anspruch 1, **dadurch gekennzeichnet, dass** der zentrale Zugspannungsbereich eine zentrale Zugspannung von bis zu 70 MPa, von bis zu 55 MPa oder von 40 MPa bis 55 MPa aufweist.

5. Chemisch verstärktes Alkali-Alumino-Silikatglas aus einer Glaszusammensetzung nach Anspruch 1, **dadurch gekennzeichnet, dass** das Glas eine Dichte von bis zu 2,6 g/cm$^3$ aufweist.

6. Chemisch verstärktes Alkali-Alumino-Silikatglas aus einer Glaszusammensetzung nach Anspruch 1, **dadurch gekennzeichnet, dass** das Glas einen linearen Ausdehnungskoeffizienten ($\alpha_{25-300}$ $10^{-7}$/°C) von 97,0 bis 105,0 aufweist.

7. Chemisch verstärktes Alkali-Alumino-Silikatglas aus einer Glaszusammensetzung nach Anspruch 1, **dadurch gekennzeichnet, dass** das Glas eine Übergangstemperatur von geringer als 545°C aufweist.

8. Verfahren zum Herstellen eines chemisch verstärkten Alkali-Alumino-Silikatglases, **dadurch gekennzeichnet, dass** es umfasst:
   Mischen und Schmelzen von Glasrohstoffkomponenten zum Erzeugen einer homogenen Glasschmelze, die enthält:

   $SiO_2$ in einem Anteil von 59,0 bis 65,0 Gew.-%,
   $Al_2O_3$ in einem Anteil von 11,9 bis 13,0 Gew.-%,
   $Na_2O$ in einem Anteil von 16,0 bis 18,5 Gew.-%,
   $B_2O_3$ in einem Anteil von 0 bis 1,0 Gew.-%,
   $K_2O$ in einem Anteil von 2,8 bis 3,3 Gew.-% und
   $MgO$ in einem Anteil von 2,0 bis 6,0 Gew.-%,
   wobei $1.5 < (B_2O_3 + Na_2O + K_2O)/Al_2O_3$,
   wobei $1.0 < (Na_2O + K_2O)/(Al_2O_3 + MgO)$,
   Formen des Glases unter Verwendung eines Verfahrens, ausgewählt aus den Verfahren Down-Draw-Verfahren und Floating-Verfahren sowie Kombinationen davon, Glühen des Glases, und
   Chemisches Verstärken des Glases durch Ionenaustausch,
   wobei das chemisch verstärkte Alkali-Alumino-Silikatglas eine Erweichungstemperatur von weniger als 765°C aufweist.

9. Verfahren nach Anspruch 8, **dadurch gekennzeichnet, dass** die Glasrohstoffkomponenten für bis zu 12 Stunden oder bis zu 4 Stunden bei einer Temperatur von 1650°C geschmolzen werden.

10. Verfahren nach Anspruch 8, **dadurch gekennzeichnet, dass** das Glas bei einer Rate von 1,0°C/Stunde geglüht wird.

11. Verfahren nach Anspruch 8, **dadurch gekennzeichnet, dass** das Glas durch Ionenaustausch in einem Salzschmelzbad chemisch verstärkt wird.

12. Verfahren nach Anspruch 11, **dadurch gekennzeichnet, dass** es sich bei der Salzschmelze um $KNO_3$ handelt.

13. Verfahren nach Anspruch 8, **dadurch gekennzeichnet, dass** das Glas durch Ionenaustausch bei einer Temperatur von 380°C bis 450°C oder bei einer Temperatur von 420°C chemisch verstärkt wird.

14. Verfahren nach Anspruch 8, **dadurch gekennzeichnet, dass** das Glas durch Ionenaustausch für bis zu 8 Stunden, bis zu 4 Stunden oder bis zu 2 Stunden chemisch verstärkt wird.

## Revendications

1. Verre d'alcali-alumino-silicate chimiquement renforcé fabriqué à partir d'une composition de verre **caractérisé en ce qu'**il comprend:

    de 59,0 à 65,0% en poids de $SiO_2$,
    de 11,9 à 13,0% en poids d'$AL_2O_3$,
    de 16,0 à 18,5% en poids de $Na_2O$,
    de 0 à 1,0% en poids de $B_2O_3$,
    de 2,8 à 3,3% en poids de $K_2O$, et
    de 2,0 à 6,0% en poids de MgO,
    où 1,5 est «$B_2O_3$ + $Na_2O$ + $K_2O$) / $AL_2O_3$;
    où 1,0 est <($Na_2O$ + $K_2O$) / ($Al_2O_3$ + MgO);
    dans lequel la composition de verre est échangée par des ions et a une couche de contrainte de compression de surface et une zone de tension centrale, et le verre a une température de ramollissement inférieure à 765 °C.

2. Verre alcalin-alumino-silicate chimiquement renforcé selon la revendication 1, **caractérisé en ce que** la couche de contrainte de compression de surface a une contrainte de compression d'au moins 650 MPa, d'au moins 700 MPa, ou de 720 MPa à 755 MPa.

3. Verre alcalin-alumino-silicate chimiquement renforcé selon la revendication 1, **caractérisé en ce que** la profondeur de la couche de contrainte de compression de surface est d'au moins 30,0 $\mu$m, d'au moins 35,0 $\mu$m, de 30,0 $\mu$m à 45,0 $\mu$m, ou de 35,0 $\mu$m à 45,0 $\mu$m.

4. Verre alcalin-alumino-silicate chimiquement renforcé selon la revendication 1, **caractérisé en ce que** la zone de tension centrale a une tension centrale allant jusqu'à 70 MPa, jusqu'à 55 MPa, ou de 40 MPa à 55 MPa.

5. Verre de silicate d'alcali-alumino chimiquement renforcé selon la revendication 1, **caractérisé en ce que** le verre a une densité allant jusqu'à 2,6 g / $cm^3$.

6. Verre de silicate alcalin-alumino chimiquement renforcé selon la revendication 1, **caractérisé en ce que** le verre a un coefficient de dilatation linéaire $\alpha_{25-300}$ $10^{-7}$ / °C) de 97,0 à 105,0.

7. Verre d'alcali-aluminosilicate chimiquement renforcé selon la revendication 1, **caractérisé en ce que** le verre a une température de transition inférieure à 545 °C.

8. Procédé de production d'un verre d'alcali-aluminosilicate chimiquement renforcé, **caractérisé en ce qu'**il comprend les étapes suivantes:
   mélanger et faire fondre des composants de matière première de verre pour former une masse fondue de verre homogène comprenant:

    de 59,0 à 65,0% en poids de $SiO_2$,

de 11,9 à 13,0% en poids d'A1$_2$O$_3$,
de 16,0 à 18,5% en poids de Na$_2$O,
de 0 à 1,0% en poids de B$_2$O$_3$,
de 2,8 à 3,3% en poids de K$_2$O, et
de 2,0 à 6,0% en poids de MgO,
où 1,5 est <B$_2$O$_3$ + Na$_2$O + K$_2$O) / Al$_2$O$_3$; et
où 1,0 est <(Na$_2$O + K$_2$O) / (Al$_2$O$_3$ + MgO);
façonner le verre en utilisant une méthode sélectionnée à partir de la méthode de tirage vers le bas, la méthode flottante et des combinaisons de celles-ci;
recuire le verre; et
renforcer chimiquement le verre par échange d'ions;
dans lequel le verre alcalin-alumino-silicate chimiquement renforcé a une température de ramollissement inférieure à 765 °C.

9. Procédé selon la revendication 8, **caractérisé en ce que** les composants de matière première de verre sont fondus pendant une durée allant jusqu'à 12 heures ou jusqu'à 4 heures à une température de 1650 °C.

10. Procédé selon la revendication 8, **caractérisé en ce que** le verre est recuit à une vitesse de 1,0 °C / heure.

11. Procédé selon la revendication 8, **caractérisé en ce que** le verre est renforcé chimiquement par échange d'ions dans un bain de sel fondu.

12. Procédé selon la revendication 11, **caractérisé en ce que** le sel fondu est du KNO$_3$.

13. Procédé selon la revendication 8, **caractérisé en ce que** le verre est renforcé chimiquement par échange d'ions à une température de 380 °C à 450 °C ou à une température de 420 °C.

14. Procédé selon la revendication 8, **caractérisé en ce que** le verre est renforcé chimiquement par échange d'ions pendant une durée allant jusqu'à 8 heures, jusqu'à 4 heures, ou jusqu'à 2 heures.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120083401 A

- US 20120171497 A

**Non-patent literature cited in the description**

- **SCHOLZE, H.** Nature, Structure and Properties. Springer-Verlag, 1988, 260